# EUROPEAN PATENT APPLICATION

(11) **EP 4 270 221 A1**
(43) Date of publication of application: **01.11.2023**
(21) Application number: 21910266.2
(22) Date of filing: 06.12.2021
(51) Int. Cl.: G06F 21/32

(54) **PORTABLE ELECTRONIC DEVICE AND IC CARD**

(30) Priority: 22.12.2020 JP 2020212444
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: KURIYAMA, Ryouichi, Kawasaki-shi, Kanagawa 212-8581 (JP)
(74) Representative: Horn Kleimann Waitzhofer Patentanwälte PartG mbB
(86) International application number: PCT/JP2021/044750
(87) International publication number: WO 2022/138116

(57) **Abstract**

A portable electronic device and an IC card capable of improving security while improving convenience by using biometric authentication are provided. According to an embodiment, a portable electronic device includes a biometric sensor, a communication interface, a first memory, a second memory, and a processor. The biometric sensor acquires biological information of a person. The communication interface communicates with a host device. The first memory stores biological information of a registrant. The second memory stores a password. According to a command for requesting biometric authentication received from the host device through the communication interface, the processor executes biometric authentication using the biological information acquired by the biometric sensor and the biological information stored in the first memory and sets a verification state of the password stored in the second memory to a verified state if the biometric authentication is successful.

## Description

### FIELD

Embodiments described herein relate generally to a portable electronic device and an IC card.

### BACKGROUND

Conventionally, some IC cards as portable electronic devices have a function of performing authentication of a person using a password. For example, a common password independent of an application program (hereinafter, referred to as an application) may be registered in the IC card, or a password set for each application may be registered in the IC card. In recent years, IC cards have become more versatile, and a plurality of passwords are registered in many IC cards.

As password verification, the IC card verifies whether or not a password input by a user matches a registered password. If a plurality of passwords and authentication methods are registered, it is necessary for a user of the IC card to memorize a plurality of passwords, etc. for respective purposes of use and input a password corresponding to the purpose of use of that IC card. On the other hand, if only a single password is registered in one IC card in consideration of user's convenience, the security is lowered.

### CITATION LIST

### PATENT LITERATURE

Patent Literature 1: Japanese Patent Application KOKAI Publication No. 2007-157002

### SUMMARY

### TECHNICAL PROBLEM

In order to solve the above problem, the present invention provides a portable electronic device and an IC card capable of improving security while increasing convenience by using biometric authentication.

### SOLUTION TO PROBLEM

According to an embodiment, a portable electronic device includes a biometric sensor, a communication interface, a first memory, a second memory, and a processor. The biometric sensor acquires biological information of a person. The communication interface communicates with a host device. The first memory stores biological information of a registrant. The second memory stores a password. According to a command for requesting biometric authentication received from the host device through the communication interface, the processor executes biometric authentication using the biological information acquired by the biometric sensor and the biological information stored in the first memory and sets a verification state of the password stored in the second memory to a verified state if the biometric authentication is successful.

### BRIEF DESCRIPTION OF THE DRAWINGS

FIG. 1 is a block diagram showing a configuration example of an IC card as a portable electronic device according to an embodiment.
FIG. 2 is a flowchart for explaining a processing example for a verification command by the IC card as the portable electronic device according to the embodiment.
FIG. 3 is a diagram showing an example of the verification command supplied to the IC card as the portable electronic device according to the embodiment.
FIG. 4 is a diagram showing an example of the verification command supplied to the IC card as the portable electronic device according to the embodiment.
FIG. 5 is a diagram showing an example of the verification command supplied to the IC card as the portable electronic device according to the embodiment.
FIG. 6 is a diagram showing a setting example of a first parameter in the verification command supplied to the IC card as the portable electronic device according to the embodiment.
FIG. 7 is a diagram showing a setting example of a second parameter in the verification command supplied to the IC card as the portable electronic device according to the embodiment.
FIG. 8 is a diagram showing an example of a table storing verification states (verification results) of a plurality of passwords in the IC card as the portable electronic device according to the embodiment.
FIG. 9 is a flowchart for explaining a processing example of password verification for the verification command by the IC card as the portable electronic device according to the embodiment.
FIG. 10 is a diagram showing an example of a table storing management information of a plurality of passwords in the IC card as the portable electronic device according to the embodiment.
FIG. 11 is a flowchart for explaining a processing example for a binary read command by the IC card as the portable electronic device according to the embodiment.
FIG. 12 is a diagram showing an example of the binary read command supplied to the IC card as the portable electronic device according to the embodiment.
FIG. 13 is a diagram showing a setting example of a first parameter in the binary read command supplied to the IC card as the portable electronic device according to the embodiment.
FIG. 14 is a diagram showing a setting example of a second parameter in the binary read command supplied to the IC card as the portable electronic device according to the embodiment.
FIG. 15 is a diagram showing an example of a table storing management information of data (EF) in the IC card as the portable electronic device according to the embodiment.
FIG. 16 is a diagram showing a configuration example of the data (EF) in the IC card as the portable electronic device according to the embodiment.
FIG. 17 is a flowchart for explaining a process example for the verification command by the IC card as the portable electronic device according to the embodiment.
FIG. 18 is a diagram showing an example of a table storing information indicating a password associated with fingerprint registration data in the IC card as the portable electronic device according to the embodiment.
FIG. 19 is a diagram showing an example of a table storing management information of a plurality of passwords in the IC card as the portable electronic device according to the embodiment.
FIG. 20 is a flowchart for explaining a process example for the verification command by the IC card as the portable electronic device according to the embodiment.
FIG. 21 is a diagram showing an example of a table storing management information of a plurality of passwords in the IC card as the portable electronic device according to the embodiment.
FIG. 22 is a flowchart for explaining a process example for the verification command by the IC card as the portable electronic device according to the embodiment.
FIG. 23 is a diagram showing an example of a table storing management information of fingerprint registration data registered for each IEF in the IC card as the portable electronic device according to the embodiment.
FIG. 24 is a flowchart for explaining a processing example including biometric authentication for a specific command by the IC card as the portable electronic device according to the embodiment.
FIG. 25 is a flowchart for explaining a processing example including biometric authentication for a specific command by the IC card as the portable electronic device according to the embodiment.
FIG. 26 is a flowchart for explaining a first modification of the processing shown in FIG. 25 by the IC card as the portable electronic device according to the embodiment.
FIG. 27 is a flowchart for explaining a second modification of the processing shown in FIG. 25 by the IC card as the portable electronic device according to the embodiment.
FIG. 28 is a flowchart for explaining a third modification of the processing shown in FIG. 25 by the IC card as the portable electronic device according to the embodiment.
FIG. 29 is a flowchart for explaining a fourth modification of the processing shown in FIG. 25 by the IC card as the portable electronic device according to the embodiment.
FIG. 30 is a flowchart for explaining a fifth modification of the processing shown in FIG. 25 by the IC card as the portable electronic device according to the embodiment.
FIG. 31 is a flowchart for explaining a sixth modification of the processing shown in FIG. 25 by the IC card as the portable electronic device according to the embodiment.
FIG. 32 is a flowchart for explaining a seventh modification of the processing shown in FIG. 25 by the IC card as the portable electronic device according to the embodiment.

### DETAILED DESCRIPTION

Hereinafter, an embodiment will be described with reference to the drawings.

First, a configuration of an IC card 1 as a portable electronic device according to an embodiment will be described.

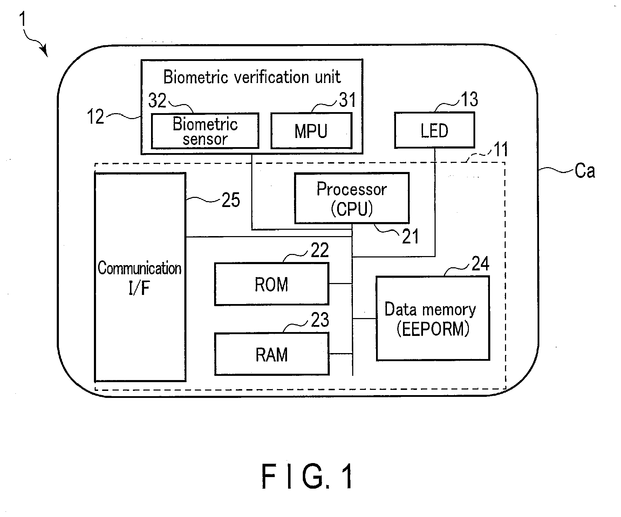

FIG. 1 is a block diagram showing a configuration example of the IC card 1 as a portable electronic device according to the embodiment.

The IC card 1 is an example of a portable electronic device that is activated (enters an operable state) by power supplied from an external device. The IC card 1 performs processing according to a command from a host device. In the present embodiment, it is assumed that the IC card 1 as the portable electronic device has a function of executing authentication using biological information. For example, the IC card 1 is also referred to as a smart card. Further, the IC card 1 may be replaced with one function provided in a mobile terminal such as a smartphone as another example of the portable electronic device.

The IC card 1 as the portable electronic device according to the embodiment has a biometric authentication function of authenticating a person through biometric verification using biological information acquired from the person. In the embodiment, the IC card 1 is described as having a biometric (fingerprint) authentication function of authenticating a person through fingerprint verification using a fingerprint as an example of biological information. However, the biometric authentication function provided in the IC card 1 as the portable electronic device according to the embodiment is not limited to biometric verification using a fingerprint. For example, the portable electronic device exemplified by the IC card 1 may perform biometric authentication using biological information other than a fingerprint.

In the configuration example shown in FIG. 1, the IC card 1 has a main body C. The main body C is, for example, made of plastic or the like and formed in a card shape. The IC card 1 includes a module M as a control unit 11, a biometric verification unit 12, an LED 13, etc. in the main body C. For example, the module M is integrally formed in a state in which a communication interface is connected to one or more IC chips. The module M as the control unit 11 is provided in the main body C in a state of being connected to the biometric verification unit 12 having an MPU 31 and a biometric sensor 32, and to the LED 13.

In the configuration example shown in FIG. 1, the module M constituting the control unit 11 has a processor 21, a ROM 22, a RAM 23, a data memory 24, and a communication interface 25. The processor 21 includes a circuit that executes various processing. The processor 21 is, for example, a central processing unit (CPU). The processor 21 controls the entire IC card 1. The processor 21 realizes various processing functions by executing programs stored in the ROM 22 or the data memory 24. However, some or all of various functions executed by the processor 21, which will be described later, may be implemented by a hardware circuit.

The ROM 22 is a non-volatile memory that functions as a program memory. In the ROM 22, a control program, control data, etc. are stored in advance. The ROM 22 is incorporated into the IC card 1 in a state in which a control program, control data, etc. are stored in the ROM 22 at a manufacturing stage. The control program and the control data stored in the ROM 22 are incorporated in advance according to the specification of the IC card 1. For example, a program for causing the processor 21 to execute processing corresponding to a command received from an external device (card reader/writer) is stored in the ROM 22.

The RAM 23 is a volatile memory that functions as a working memory. The RAM 23 also functions as a buffer for temporarily storing data that is being processed by the processor 21, etc. For example, the RAM 23 functions as a communication buffer that temporarily stores data transmitted and received to and from the external device via the communication interface 25.

The data memory 24 is a non-volatile memory in which data can be written and rewritten. The data memory 24 is composed of, for example, an electrically erasable programmable read only memory (EEPROM (registered trademark)) or the like. In the data memory 24, a program and various data according to the operational usage of the IC card 1 are written. In the data memory 24, a program file, a data file, etc. are defined, and a control program and various data are written in these files. Part or all of the area of the data memory 24 is tamper-resistant, and data can be stored securely.

The data memory 24 includes a first memory for storing biological information (authentication data) of an authorized user (registrant) and a second memory for storing password registration data for performing password verification. The data memory 24 also stores various tables to be described later.

For example, the data memory 24 as the first memory stores biological information (biological registration data) of a registrant as data for executing biometric authentication. If the IC card 1 executes biometric authentication using a fingerprint, the data memory 24 stores fingerprint data (fingerprint registration data) of a registrant. The fingerprint data of the registrant is a fingerprint image or fingerprint feature data to be verified with fingerprint information to be acquired by a fingerprint sensor as the biometric sensor 32. In the data memory 24, fingerprint data may be registered for each of a plurality of fingers of one registrant. If one IC card 1 is used by a plurality of users, fingerprint data of a plurality of registrants who are authorized users may be registered in the data memory 24.

The communication interface 25 includes a communication control unit and an interface unit, and constitutes a communication unit. The communication interface 25 is an interface for communicating with a host device that supplies source power and a command to the IC card 1. The communication interface 25 realizes a communication function by a communication method corresponding to an interface of an external device. Further, the communication interface 25 may be formed to support a plurality of communication methods (e.g., contact communication and contactless communication).

If the IC card 1 is realized as a contact-type IC card, the communication interface 25 constitutes a communication unit that communicates with an external device in contact with the external device. In this case, the communication interface 25 includes a contact portion that physically and electrically contacts a contact portion provided in the card reader/writer of the external device, and is constituted by a communication control circuit that controls transmission and reception of a signal via the contact portion, etc.

If the IC card 1 is realized as a contactless type IC card, the communication interface 25 constitutes a communication unit that communicates with the card reader/writer of the external device in a contactless (wireless) manner. In this case, the communication interface 25 includes an antenna for transmitting and receiving radio waves, and includes a modulation circuit for generating radio waves to be transmitted from the antenna, a demodulation circuit for generating a signal from radio waves received by the antenna, etc.

The biometric verification unit 12 includes an MPU 31 and a biometric sensor 32, and is connected to the module M as the control unit 11. The biometric verification unit 12 also includes a memory that stores an authentication program for the MPU 31 to execute biometric authentication through biometric (fingerprint) verification, etc.

The biometric sensor 32 is an example of a biological information acquisition unit that acquires fingerprint information as biological information. In the present embodiment, the biometric sensor 32 is a fingerprint sensor that reads fingerprint information (fingerprint image) of a user. The fingerprint sensor as the biometric sensor 32 is provided so that a sensor for reading a fingerprint is exposed on the surface of the main body C of the IC card 1, and reads a fingerprint of a finger of a person held over an exposed sensor portion. The biometric sensor 32 is not limited to a fingerprint sensor, and may be a sensor that acquires biological information other than a fingerprint.

The MPU 31 executes biometric authentication using fingerprint information as biological information acquired by the biometric sensor 32 by executing a program for biometric authentication. For example, the MPU 31 extracts a fingerprint image from an image read by the fingerprint sensor as the biometric sensor 32, and verifies the fingerprint image extracted from the image read by the fingerprint sensor with the fingerprint image (or fingerprint feature data) of the registrant registered in the data memory 24 to execute fingerprint authentication.

In the configuration example shown in FIG. 1, the MPU 31 provided separately from the processor 21 is formed to execute biometric authentication through biometric (fingerprint) verification, but the processor 21 may execute biometric authentication instead. If the biometric authentication is executed by the processor 21, it suffices that the biological information read by the biometric sensor 32 is supplied to the processor 21. For example, the processor 21 may extract fingerprint information from an image supplied from the fingerprint sensor as the biometric sensor 32 and verify the extracted fingerprint information with the fingerprint information of the registrant registered in the data memory 24.

The LED 13 has a light emitting device. In the LED 13, a light-emitting state of the light emitting device is controlled by the control of the control unit 11. For example, the LED 13 is provided in the main body C in a state in which a lighting state can be visually recognized on the surface of the main body C.

Next, an operation of the IC card 1 according to the present embodiment will be described.

The IC card 1 according to the embodiment has a function of operating in accordance with an existing communication protocol used for an IC card standardized by an international standard or the like. The IC card 1 also has a biometric authentication function using biological information acquired by the biometric sensor 32 and an authentication function through password verification. The IC card 1 stores (holds) at least one piece of password data to be used for password verification. The IC card 1 according to the embodiment has a function enabling some or all of the password verification to be transferred to biometric authentication.

Hereinafter, several operation examples will be described for rewriting a verification state (verification result) of some or all of the passwords to a verified (verification successful, verification OK) state if biometric authentication is successful in the IC card 1.

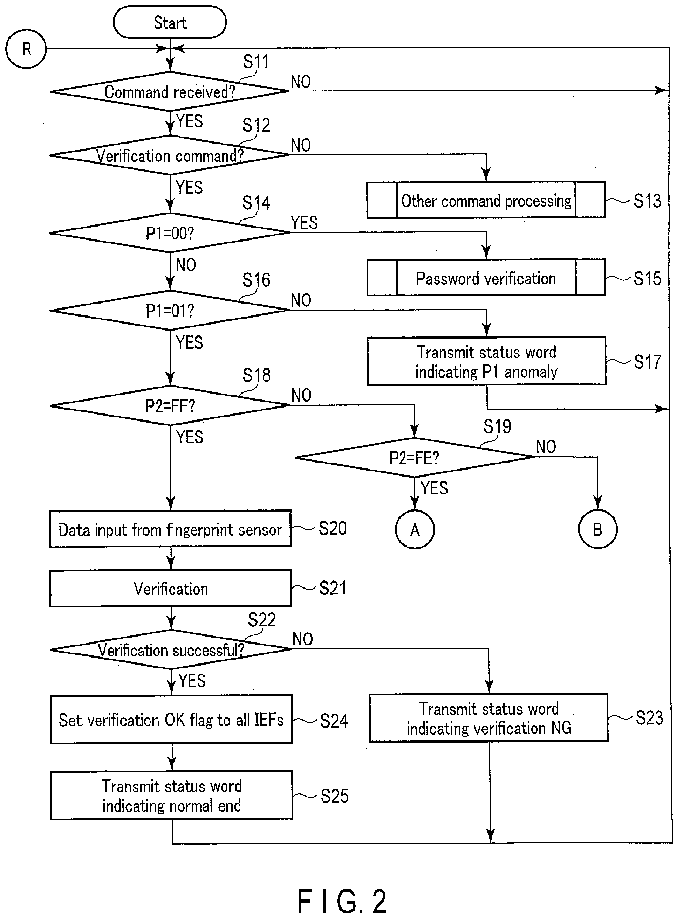

FIG. 2 is a flowchart showing a processing example in a case where the IC card 1 receives a verification command and a processing example in which verification results of all passwords are replaced with verified states in response to success in biometric authentication in the IC card 1.

The IC card 1 is activated by receiving supply of source power from a host device, and enters a state in which a command from the host device can be received. The processor 21 of the IC card 1 receives a command formed in a predetermined format from the host device via the communication interface 25, and performs processing requested by the received command.

As shown in FIG. 2, if the processor 21 of the IC card 1 receives a command from the host device via the communication interface 25 (YES in S11), the processor 21 determines whether or not the received command is a verification command for requesting verification (S12). Here, it is assumed that the command supplied from the host device to the IC card 1 is constituted in accordance with a standard defined in advance. The processor 21 of the IC card 1 executes a program stored in the ROM 22 or the data memory 24, thereby interpreting a command constituted in accordance with the standard and performing processing according to the command.

In the present embodiment, in a case where the received command is not a verification command (NO in S12), the processor 21 performs command processing designated by that command (S13). As an example of other command processing, processing for a binary data read command will be described later.

If the received command is a verification command (YES in S12), the processor 21 checks a parameter designated by the received verification command as information indicating a processing content, and performs processing of the content designated by the parameter.

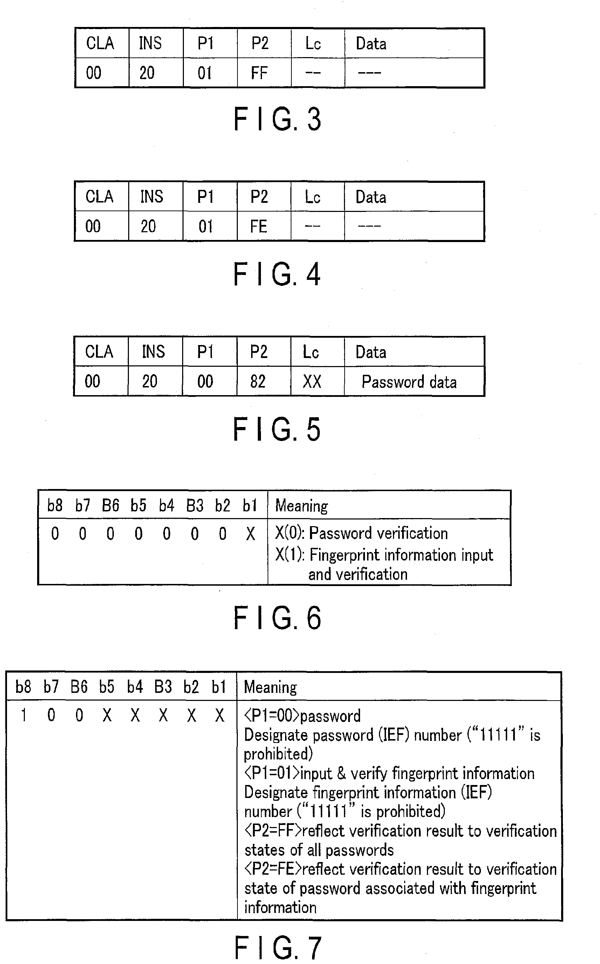

FIGS. 3 to 5 are diagrams showing configuration examples of a verification command supplied from the host device to the IC card 1.

In the present embodiment, as shown in FIGS. 3 to 5, a command supplied from the host device to the IC card 1 is constituted by a format in which "CLA", "INS", "P1", "P2", "Lc", and "Data" are arranged. "CLA" and "INS" indicate contents of the command. For example, in the verification command, as shown in FIGS. 3 to 5, "CLA" and "INS" are "00" and "20", respectively. Further, "P1" and "P2" are parameters in which meanings according to the command indicated by "CLA" and "INS" are defined. "Lc" indicates a length of data stored in "Data", and "Data" indicates attached data.

FIG. 6 is a diagram showing a meaning of "P1" which is a first parameter in the verification command.

In the example shown in FIG. 6, if "P1" in the verification command is "00", it is indicated that that verification command is a command for requesting password verification. For example, in the verification command shown in FIG. 5, "P1" is "00", which indicates that the verification command is a command for requesting password verification. In the command shown in FIG. 5, password data (input password data) having a length (size) indicated by "Lc" is stored in "Data".

In FIG. 6, if "P1" in the verification command is "01", it is indicated that that verification command is a command for requesting input and verification (biometric authentication) of fingerprint information. For example, in the verification commands shown in FIGS. 3 and 4, "P1" is "01", which indicates that the verification command is a command for requesting biometric authentication.

In accordance with the definition exemplified in FIG. 6, the processor 21 determines whether or not the verification command designates password verification (S14). Here, it is assumed that the processor 21 determines whether or not the password verification is designated based on whether or not the parameter "P1" in the verification command is "00".

If P1 of the received verification command is "00", that is, if the verification command is a command for requesting password verification (YES in S14), the processor 21 executes password verification (S15). The password verification processing will be described in detail later.

If P1 of the received verification command is not "00", that is, if the verification command is not a command for requesting password verification (NO in S14), the processor 21 determines whether or not the verification command requests biometric (fingerprint) authentication (S16) .

If P1 of the received verification command is neither "00" nor "01", that is, if the verification command designates neither password verification nor biometric authentication (NO in S16), the processor 21 determines that designation of a verification method by the verification command is unknown (the value of P1 is anomalous). In this case, the processor 21 generates a status word including an error notification indicating that the value of P1 in the verification command is anomalous, transmits the generated status word to the host device as a response to that command (S17), and enters a state of waiting for reception of a next command.

If P1 of the received verification command is "01", that is, if the verification command is a command for requesting biometric verification (YES in S16), the processor 21 specifies a password to which a result of biometric authentication is to be reflected (a password to be set to a verified state in response to success in biometric authentication). Here, it is assumed that the processor 21 specifies a password to which the authentication result of the biometric authentication is to be reflected based on the value of P2 which is the second parameter in that verification command.

FIG. 7 is a diagram showing a meaning of "P2" which is the second parameter in the verification command.

In a setting example shown in FIG. 7, if "P1" in the verification command is "00", the value stored in "P2" is information indicating a password for setting a verification state (verification result) to a verified state (verification successful, OK) in response to success in biometric authentication.

According to the definition shown in FIG. 7, the IC card 1 interprets that, if "P2" in a command (a verification command for requesting biometric authentication) with "P1" of "01" received from the host device is "FF", verification results for all passwords are set to verified states (verification successful, verification OK) in response to success in biometric authentication. That is, if the verification command in which "P2" is "FF" as shown in FIG. 3 is received, the IC card 1 performs a process of setting verification results for all the passwords to verified states in response to success in biometric authentication.

If "P2" in the verification command for requesting biometric authentication is "FE", the IC card 1 interprets that, if the biometric authentication is successful, a verification result for a password associated with biological information (fingerprint registration data) for which the biometric verification is successful is set to a verified state (verification successful, verification OK). That is, if a verification command in which "P2" is "FE" as shown in FIG. 4 is received, the IC card 1 executes a process of setting a verification result for a password associated with fingerprint registration data used for biometric verification to a verified state in response to the success in biometric authentication.

If "P2" in the verification command for requesting biometric authentication is a value other than a special value (e.g., "FF" and "FE"), it is interpreted that the value of P2 is a value (IEF: Internal Elementary File) indicating a password whose verification result is set to a verified state in response to success in biometric authentication. That is, if "P2" in the verification command for requesting biometric authentication is a value (IEF: Internal Elementary File) indicating a password, the IC card 1 interprets that a verification result for the password (IEF) designated in response to the success in biometric authentication is set to a verified state (verification successful, verification OK).

Here, it is assumed that the processor 21 operates in accordance with the definition exemplified in FIG. 7. In this case, if P2 of the received verification command is "FF", the processor 21 determines that verification results of all the passwords are set to verified states in response to success in biometric authentication. That is, if P1 of the received verification command is "01" and P2 is "FF" (YES in S18), the processor 21 interprets that verification results of all the passwords are set to verified states in response to the success in biometric authentication, and causes the biometric verification unit 12 to execute input of biological information and biometric verification (S20 and S21).

For example, the processor 21 transmits fingerprint data (fingerprint registration data) of a registrant registered in the data memory 24 to the biometric verification unit 12, and instructs the biometric verification unit 12 to input the fingerprint data (input fingerprint data) by the biometric sensor 32 and to verify the fingerprint registration data with the input fingerprint data. The MPU 31 of the biometric verification unit 12 holds the fingerprint registration data supplied under the control of the processor 21, and inputs the fingerprint data by the biometric sensor 32 (S20). If the biometric sensor 32 inputs the fingerprint data, the MPU 31 verifies the fingerprint data (input fingerprint data) acquired by the biometric sensor 32 with the fingerprint registration data (S21), and supplies a verification result thereof to the processor 21.

The processor 21 determines whether or not the biometric authentication is successful according to the verification result from the biometric verification unit 12. The processor 21 turns on the LED 13 according to the result of the biometric authentication. For example, the processor 21 turns on the LED 13 in a lighting state indicating that the biometric authentication is being executed during the input of the biological information and the execution of the biometric verification in the biometric verification unit 12. Further, the processor 21 turns on the LED 13 in a lighting state indicating that the biometric authentication is successful if the biometric authentication is successful, and turns on the LED 13 in a lighting state indicating that the biometric authentication has failed if the biometric authentication has failed.

If the biometric authentication through the biometric verification in the biometric verification unit 12 fails (YES in S22), the processor 21 generates a status word indicating a verification failure (NG), and transmits the generated status word to the host device which is a transmission source of the verification command (S23).

If the biometric authentication through the biometric verification in the biometric verification unit 12 is successful (YES in S22), the processor 21 stores information (flag) indicating that verification results for all the passwords (IEF) are verified states (successful, OK) (S24).

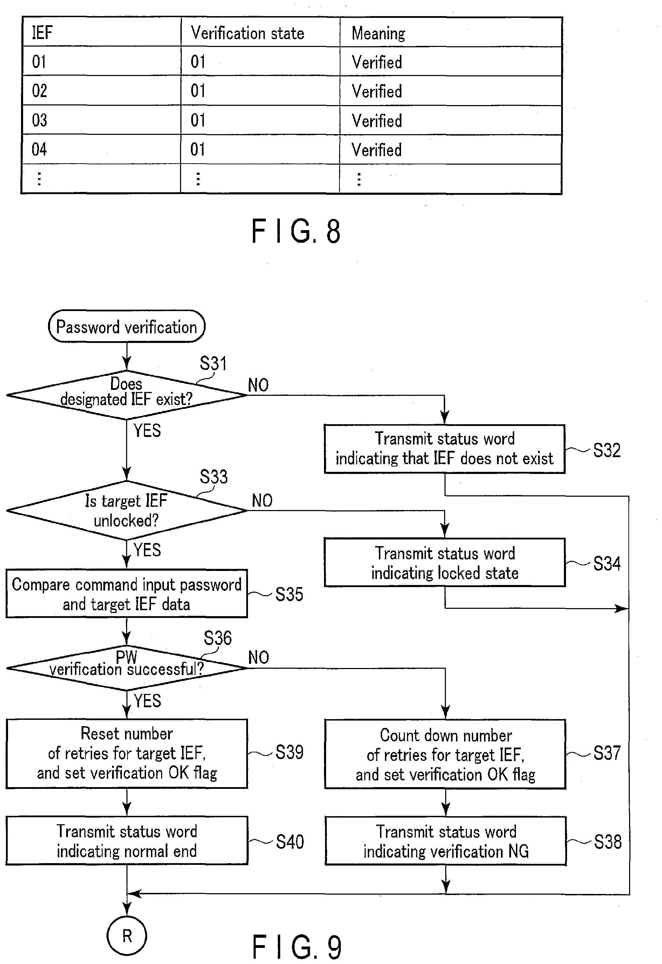

FIG. 8 is a diagram showing a configuration example of a verification state table of password verification in which verification results (verification states) for passwords are recorded.

The example shown in FIG. 8 indicates a state in which information indicating that verification states for all passwords are verified states is stored in the verification state table. The verification state table as shown in FIG. 8 is provided in the data memory 24 or the RAM 23. For example, the processor 21 provides a verification state table as shown in FIG. 8 in the data memory 24, and sets verification results (verification states) for all passwords in the verification state table to information indicating verified states if biometric authentication through biometric verification by the biometric verification unit 12 is successful.

In a case where the second parameter (P2) of the verification command for requesting the biometric authentication is "FF", if the biometric verification by the biometric verification unit 12 is successful (YES in S22), the processor 21 stores information (flag) indicating that verification results are verified states (verification successful) for all the passwords (S24). After the verification results for all the passwords are set to verified states in response to the success in biometric authentication, the processor 21 transmits a status word indicating a normal end to the host device that is the transmission source of that verification command (S25), and ends a series of processing for the verification command.

Next, the password verification processing as the process in S15 shown in FIG. 2 will be described.

FIG. 9 is a flowchart for explaining a processing example of the password verification processing in the IC card 1.

As described above, in the processing shown in FIG. 2, if the first parameter (P1) in the received verification command is "00" (YES in S14), the processor 21 performs the password verification processing (S15).

In the processing example of the password verification processing shown in FIG. 9, the processor 21 determines whether or not an IEF designated by the second parameter (P2) in the received verification command for requesting password verification exists (S31). The IEF is a file storing a password to be stored in the data memory 24. The processor 21 determines whether or not the designated password exists based on whether or not the IEF designated by the received verification command for requesting password verification exists.

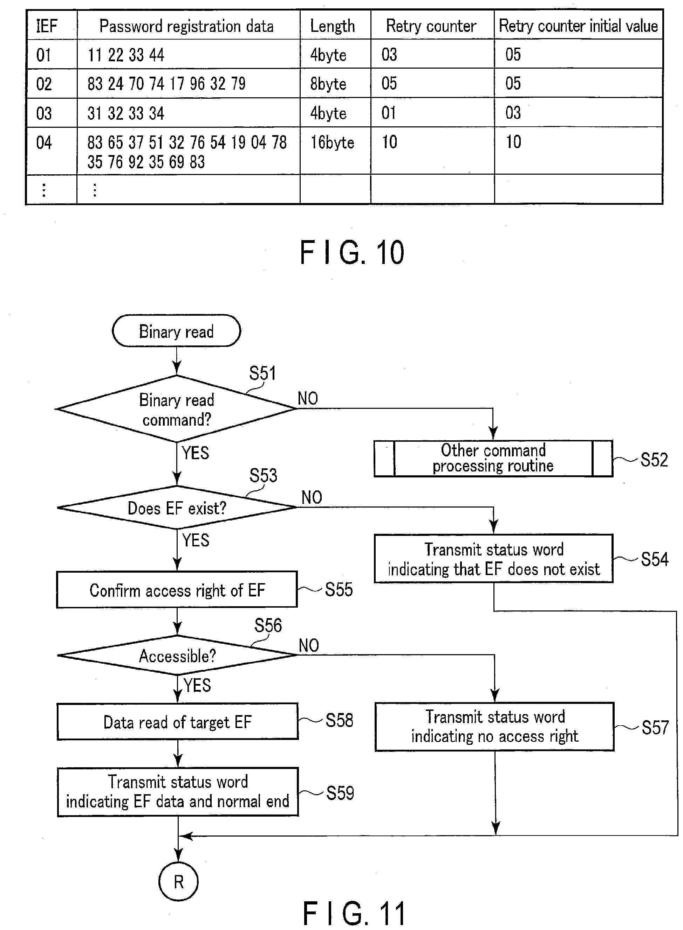

FIG. 10 is a diagram showing an example of a password management table for managing passwords.

In the example shown in FIG. 10, in the password management table, password registration data, length information, a retry counter, and an initial value of the retry counter are stored in association with each other for each IEF. The IEF is specified by a number as identification information (ID) indicating the password (IEF). The password registration data is password data that is registered in advance. The length information indicates a length of the password data stored as the password registration data.

The retry counter stores a value indicating the remaining number of times (the number of retries) that password verification can be executed using a corresponding password. The initial value of the retry counter indicates an upper limit value of verification by the corresponding password. The retry counter is a counter in which an initial value of the retry counter, which is an upper limit value, is set if the retry counter is reset, and which is counted down each time verification fails. The retry counter is returned to an initial value if a verification state by a corresponding password becomes verification successful. However, if the retry counter is 0, that IC card 1 enters a locked state, and thus the retry counter cannot be returned to an initial value by password verification or the like.

If the IEF designated by the received verification command does not exist (NO in S31), the processor 21 generates a status word indicating that the designated IEF (password) does not exist, and transmits the generated status word to the host device that is the transmission source of that verification command (S32). If the status word indicating that the designated IEF does not exist is transmitted, the processor 21 enters a state of waiting for input of a next command.

If the IEF designated by the received verification command exists (YES in S31), the processor 21 determines whether or not the IEF designated by the received verification command is not in a locked state (S33). The processor 21 determines whether or not the password (IEF) designated by the command is in the locked state based on the value of the retry counter stored in the password management table as shown in FIG. 10. For example, if the retry counter corresponding to the designated IEF is 0, the processor 21 determines that that IEF is in the locked state.

If the IEF designated by the verification command is in the locked state (YES in S33), the processor 21 generates a status word indicating the locked state, and transmits the generated status word to the host device that is the transmission source of that verification command (S34). If the status word indicating that the designated IEF is in the locked state is transmitted, the processor 21 enters a state of waiting for input of a next command.

If the IEF designated by the verification command is not in the locked state (unlocked state) (YES in S33), the processor 21 verifies the password data (input password) stored in Data of that verification command with the password data (password registration data) of the IEF designated by that verification command (S35). If the input password matches the password registration data of the designated IEF, the processor 21 determines that the password verification requested by that verification command is successful. If the input password does not match the password registration data of the designated IEF, the processor 21 determines that the password verification requested by that verification command has failed.

If the password verification has failed (NO in S36), the processor 21 re-sets the number of retries by counting down the retry counter for the designated IEF, and resets information (flag) indicating a verification result to an unverified state (S37). Further, the processor 21 transmits a status word indicating that the password verification has failed to the host device that is the transmission source of the verification command (S38), and enters a state of waiting for reception of a next command.

If the password verification is successful (YES in S36), the processor 21 resets the number of retries to the initial value by setting the retry counter for the designated IEF to the initial value, and sets the information (flag) indicating the verification result to a verified (verification successful) state (S39). Further, the processor 21 transmits a status word indicating that the password verification is successful to the host device that is the transmission source of the verification command (S40), and enters a state of waiting for reception of a next command.

Next, command processing (data read processing) for a binary read command for requesting reading of binary data as an example of the command processing in the IC card 1 will be described. FIG. 11 is a flowchart for explaining data read processing for a binary read command as an example of the command processing by the IC card 1.

In the processing shown in FIG. 2 as described above, if the received command is not a verification command (NO in S12), the processor 21 performs command processing corresponding to the received command (S13). In the processing example shown in FIG. 11, a processing example in a case where the received command is a binary read command for requesting reading of binary data is shown.

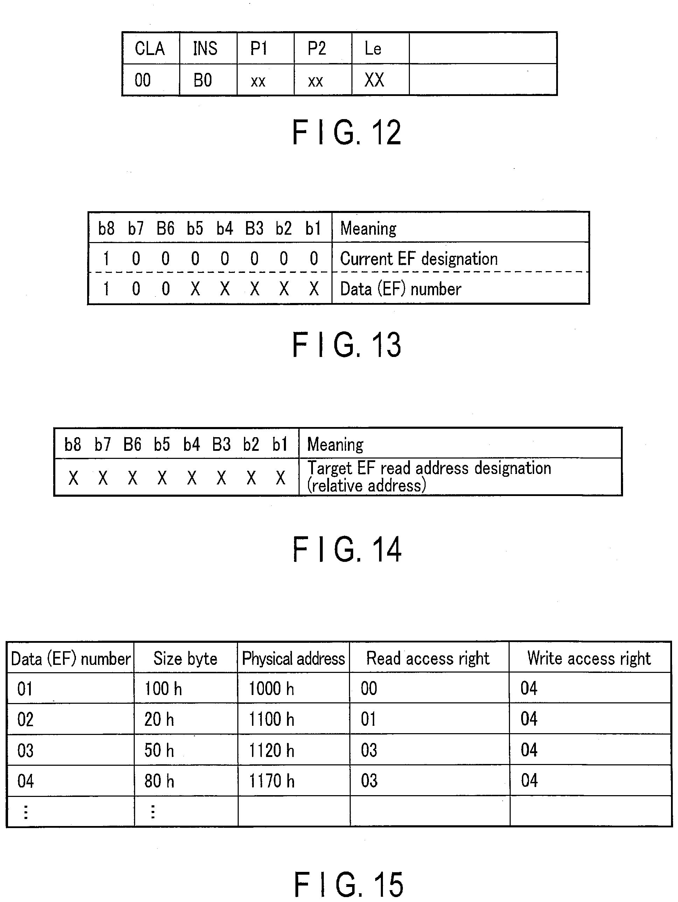

FIG. 12 is a diagram showing a configuration example of a binary read command. FIG. 13 is a diagram showing a configuration example of a first parameter (P1) in the binary read command. FIG. 14 is a diagram showing a configuration example of a second parameter (P2) in the binary read command.

As shown in FIG. 12, in the binary read command, "CLA" and "INS" are "00" and "B0", respectively. Further, "P1" of the binary read command stores a value indicating binary data to be read. In the example shown in FIG. 13, in "P1" of the binary read command, a value indicating a file (EF: Elementary File) storing data to be read is stored. "P2" of the binary read command stores a value indicating an address to be read. In the example shown in FIG. 14, an address (relative address) indicating a read position in the EF designated by "P1" is stored in "P2" of the binary read command.

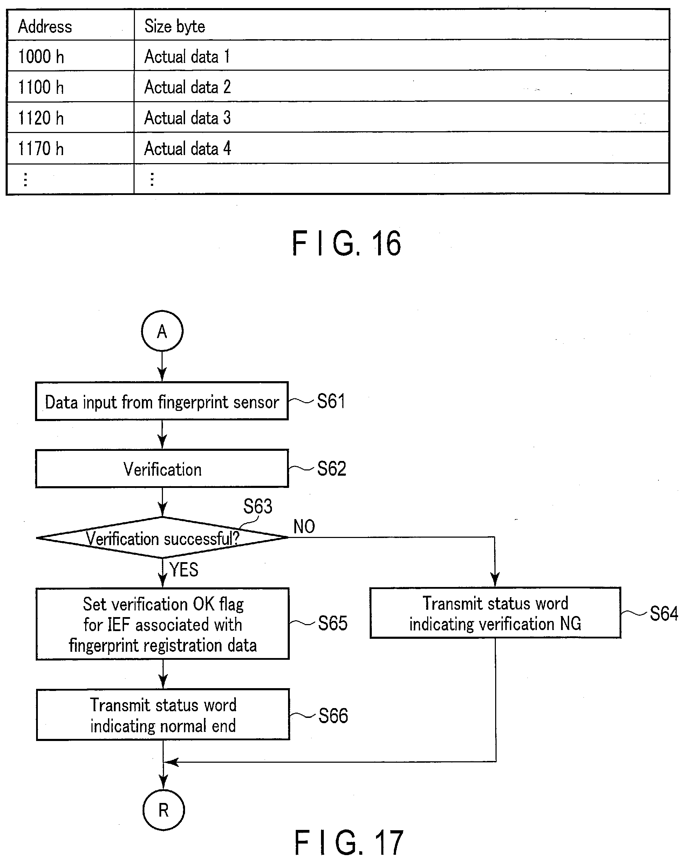

FIG. 15 is a diagram showing an example of an EF management table storing management information of an EF that stores data. In addition, FIG. 16 is a diagram showing a configuration example of the EF in the data memory 24.

The EF management table as shown in FIG. 15 is stored in, for example, the data memory 24. In the EF management table, data indicating a size, a physical address, a read access right, a write access right, etc. is stored for each EF. The size indicates a size of actual data in that EF. The physical address indicates a location (write start position) in the data memory 24 where the actual data of that EF is stored.

As the read access right, information indicating a data read right for that EF is stored. For example, as the read access right, "00" indicates that access to data of that EF is free. "0x" indicates that, in order to access data of that EF, it is necessary that verification based on authentication information stored in IEF (0x) is successful. Here, an IEF having a number (ID) of xx is denoted by IEF (xx).

In the EF management table as shown in FIG. 15, information indicating a read access right and a write access right to that EF is stored. In order to read the data of the EF in which the read access right is "01", it is necessary that a verification result of password verification using a password of IEF (01) is a verified state. The EFs whose read access rights are "01", "02", "03", and "04" indicate that it is necessary as a condition (authority) for reading data that verification results of passwords of IEF (01), IEF (02), IEF (03), and IEF (04) are verified states, and "00" indicates that access to the data of that EF is free.

In order to read the data of the EF whose write access right is "04", it is necessary that a verification result of password verification using the password of IEF (04) is a verified state. The EFs whose write access rights are "01", "02", "03", and "04" indicate that it is necessary as a condition (authority) for writing data that verification results of the passwords of IEF (01), IEF (02), IEF (03), and IEF (04) are verified states, and "00" indicates that access to the data of that EF is free.

In the EF, as shown in FIG. 16, actual data is stored at a physical address designated by the EF management table as shown in FIG. 15. For example, "actual data 1" stored in address "1000h" shown in FIG. 16 means that the size of EF "01" (EF having the data number "01") shown in FIG. 15 is "100h", the read access right is "00", and the write access right is "04".

In the processing example shown in FIG. 11, if the received command is not a binary read command (NO in S51), the processor 21 performs command processing corresponding to the received command (S52). If the received command is a binary read command (YES in S51), the processor 21 performs a read process of the data in accordance with the values stored in "P1" and "P2" of the received binary read command.

That is, if the binary read command is received (YES in S51), the processor 21 determines whether or not there is a file (EF) of the data to be read which is designated by that command (S53). If the EF designated by the binary read command does not exist (NO in S53), the processor 21 transmits a status word indicating that the designated data (EF) does not exist to the host device that is the transmission source of that command (S54), and enters a state of waiting for reception of a next command.

If the data (EF) designated by the received binary read command exists (YES in S53), the processor 21 confirms a read access right to the designated EF (S55). For example, the processor 21 confirms the read access right to the designated EF by referring to information stored in an EF management table as shown in FIG. 15.

If the read access right to the EF designated by the binary read command is not satisfied (NO in S56), the processor 21 determines that reading of data from the EF designated by the binary read command is not allowed. In this case, the processor 21 transmits a status word indicating that there is no authority (access right) to read the data of the designated EF to the host device that is the transmission source of that binary read command (S57), and enters a state of waiting for reception of a next command.

If the access right to the EF designated by the binary read command is satisfied (YES in S56), the processor 21 reads the data of the EF designated by that command (S58). For example, the processor 21 refers to the information stored in the EF management table, and reads the data of that EF from a read start position designated as a relative address by that command. Upon reading the data, the processor 21 transmits a status word including the read data and information indicating a normal end to the host device that is the transmission source of the binary read command (S59), and enters a state of waiting for reception of a next command.

The above processing is a processing example of setting verification results of all the passwords to verified (verification successful) states if biometric authentication is successful in the IC card 1. According to the above-described processing, if biometric authentication is successful in response to a request for biometric verification, it is possible to uniformly set the verification results for the passwords registered in that IC card 1 to verified states (verification successful), and it is possible to replace password verification with biometric authentication with high security by simple processing. In addition, according to the above-described processing example, the IC card can perform not only the biometric authentication but also the password verification. Therefore, even if a failure occurs in the biometric authentication function, it is possible to perform verification using a password.

Next, a process will be described in which, if biometric authentication in the IC card 1 is successful, a verification result of a password associated with registered biological information (fingerprint registration data) used for the biometric authentication is set to a verified state.

FIG. 17 is a flowchart showing a process example of setting a verification result of a password associated with fingerprint registration data used for biometric authentication to a verified state if the biometric authentication in the IC card 1 is successful.

In the processing shown in FIG. 2 as described above, if P1 of the received verification command is "01" and P2 is "FE" (YES in S19), the processor 21 performs the process of setting the verification result for the password associated with the fingerprint registration data to a verified state if the biometric authentication is successful as shown in FIG. 3.

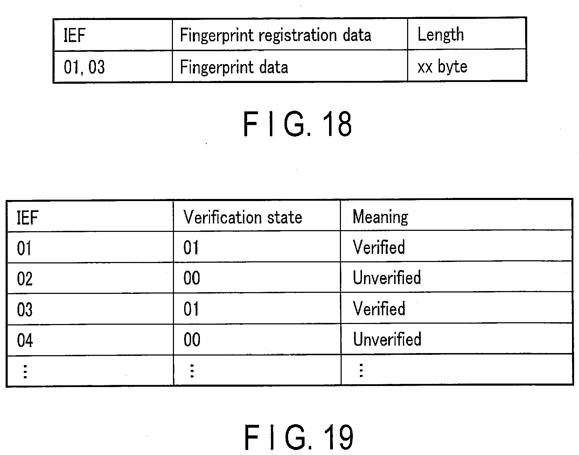

FIG. 18 is a diagram showing an example of a corresponding password setting table in which a password is associated with fingerprint registration data as biological information of a registrant used for fingerprint verification as biometric authentication.

In the example shown in FIG. 18, a plurality of passwords (IEF) are associated with one piece of fingerprint registration data in the corresponding password setting table. According to the example shown in FIG. 18, if the biometric authentication using the fingerprint registration data is successful, the password of IEF (01) and the password of IEF (03) are set to a verified (verification successful) state. In the setting table of the corresponding password as shown in FIG. 18, all the passwords are associated with the fingerprint registration data so that, if the biometric authentication using that fingerprint registration data is successful, verification results of all the passwords can be set to verified states.

That is, if P1 of the received verification command is "01" and P2 is "FE" (YES in S17), the processor 21 causes the biometric verification unit 12 to execute the biometric authentication using the fingerprint registration data in which the corresponding passwords are set, as shown in FIG. 18 (S61 and S62).

For example, the processor 21 transmits the fingerprint data (fingerprint registration data) of the registrant registered in the data memory 24 in association with the corresponding passwords to the biometric verification unit 12, and instructs the biometric verification unit 12 to input fingerprint data (input fingerprint data) by the biometric sensor 32 and to verify the fingerprint registration data with the input fingerprint data. The MPU31 of the biometric verification unit 12 inputs fingerprint data by the biometric sensor 32 (S61), verifies the fingerprint data (input fingerprint data) input by the biometric sensor 32 with the fingerprint registration data (S62), and supplies a verification result thereof to the processor 21.

The processor 21 determines whether or not the biometric authentication is successful according to the verification result from the biometric verification unit 12. Further, the processor 21 turns on the LED 13 according to the result of the biometric authentication. For example, the processor 21 turns on the LED 13 in a lighting state indicating that the biometric authentication is being executed during the input of the biological information and the execution of the biometric verification in the biometric verification unit 12. Furthermore, the processor 21 turns on the LED 13 in a lighting state indicating that the biometric authentication is successful if the biometric authentication is successful, and turns on the LED 13 in a lighting state indicating that the biometric authentication has failed if the biometric authentication has failed.

If the biometric authentication through the biometric verification in the biometric verification unit 12 fails (NO in S63), the processor 21 generates a status word indicating the failure of the biometric authentication (verification NG), transmits the generated status word to the host device that is the transmission source of the verification command (S64), and enters a state of waiting for reception of a next command.

If the biometric authentication through the biometric verification by the biometric verification unit 12 is successful (YES in S63), the processor 21 stores information (flag) indicating that the verification result is a verified state (verification successful, OK) for the password (IEF) associated with the fingerprint registration data used for that biometric authentication (S65).

FIG. 19 is a diagram showing an example of a verification state table in a case where a verification result for a password associated with the fingerprint registration data shown in FIG. 18 is a verified state (verification successful, OK).

In the example shown in FIG. 19, the verification states of IEF (01) and IEF (03) are verified states, and the other IEFs are in unverified states. With reference to the table shown in FIG. 18, if the biometric authentication using the fingerprint registration data shown in FIG. 18 is successful, the processor 21 sets the verification states of IEF (01) and IEF (03) associated with that fingerprint registration data to verified states.

That is, in a case where the second parameter (P2) of the received verification command is "FE", if the biometric verification by the biometric verification unit 12 is successful, the processor 21 sets the verification result of the password associated with the biological registration data used for the biometric verification to a verified state (verification successful). After setting the verification result of the password associated with the fingerprint registration data to the verified state in response to the success in biometric authentication, the processor 21 transmits a status word indicating a normal end to the host device that is the transmission source of that verification command (S66), and enters a state of waiting for reception of a next command.

According to the above processing, the IC card executes biometric authentication according to a verification command for requesting biometric verification, and if the biometric authentication is successful, sets a verification result of a password associated with biological registration information (fingerprint registration data) used in that biometric authentication to a verified (verification successful) state. Accordingly, if the biometric authentication in response to the biometric verification request is successful, the IC card can set the verification result for the password associated with the biological registration information to the verified state (verification successful), and can replace the verification of the password associated with the biological registration information with biometric authentication with high security. In addition, according to the above-described processing example, the IC card can perform not only the biometric authentication but also the password verification. Therefore, even if a failure occurs in the biometric authentication function, it is possible to perform verification using a password.

Next, a process of setting a verification result of a password of an IEF designated in a verification command to a verified state if biometric authentication in the IC card 1 is successful will be described.

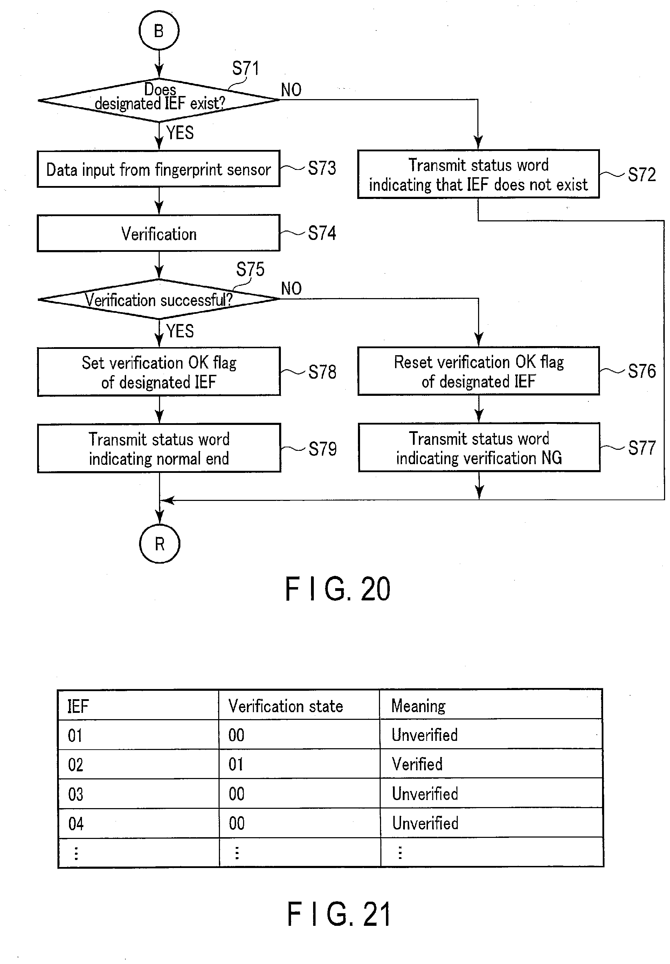

FIG. 20 is a flowchart showing a process example of setting the verification result for the password designated by the command to a verified state if the biometric authentication in the IC card 1 is successful in the processing shown in FIG. 2.

In the processing shown in FIG. 2 as described above, if P1 of the received verification command is "01" and P2 is a value other than "FF" and "FE" (NO in S19), the processor 21 determines whether or not the IEF designated by P2 of the received verification command exists (S71). If the IEF designated by P2 does not exist (NO in S71), the processor 21 transmits a status word indicating that the designated IEF does not exist to the host device that is the transmission source of the command (S72), and enters a state of waiting for a next command.

If the IEF designated by P2 of the verification command for requesting the biometric authentication exists (YES in S71), the processor 21 executes biometric authentication using fingerprint registration data registered corresponding to the IEF designated by the received verification command.

The processor 21 transmits the fingerprint registration data corresponding to the designated IEF to the biometric verification unit 12, and instructs the biometric verification unit 12 to input the fingerprint data by the biometric sensor 32 and to verify the fingerprint registration data with the input fingerprint data. The MPU 31 of the biometric verification unit 12 inputs fingerprint data by the biometric sensor 32 (S73), verifies the fingerprint data (input fingerprint data) input by the biometric sensor 32 with the fingerprint registration data designated by the processor 21 (S74), and supplies a verification result thereof to the processor 21.

The processor 21 determines whether or not the biometric authentication is successful according to the verification result from the biometric verification unit 12 (S75). Further, the processor 21 turns on the LED 13 according to the result of the biometric authentication. For example, the processor 21 turns on the LED 13 in a lighting state indicating that the biometric authentication is being executed during the input of the biological information and the execution of the biometric verification in the biometric verification unit 12. Furthermore, the processor 21 turns on the LED 13 in a lighting state indicating that the biometric authentication is successful if the biometric authentication is successful, and turns on the LED 13 in a lighting state indicating that the biometric authentication has failed if the biometric authentication has failed.

If the biometric authentication using the fingerprint registration data corresponding to the designated IEF fails (NO in S75), the processor 21 resets information indicating the verification result for the password of the designated IEF to an unverified state (S76), transmits a status word indicating the failure of the biometric authentication (verification NG) to the host device that is the transmission source of the verification command (S77), and enters a state of waiting for reception of a next command.

For example, FIG. 21 is a diagram showing an example of a verification state table in a case where a verification result for a password is set to a verified state (verification successful, OK).

In a case where an IEF designated in P2 of a received verification command is IEF (01), if biometric authentication using fingerprint registration data corresponding to IEF (01) fails, the processor 21 resets a verification state of IEF (01) to an unverified state as shown in the verification state table shown in FIG. 21.

If the biometric authentication using the fingerprint registration data corresponding to the designated IEF is successful (YES in S75), the processor 21 sets the verification result for the password of the designated IEF to information (flag) indicating that the verification result is a verified state (verification successful, OK) (S78). For example, in a case where the IEF designated in P2 of the received verification command is IEF (02), if the biometric authentication using the fingerprint registration data corresponding to IEF (02) is successful, the processor 21 sets a verification state of IEF (02) to "01", which is a value indicating a verified state, as in the verification state table shown in FIG. 21.

After the verification result for the password of the IEF designated in response to the success in biometric authentication is set to the verified state, the processor 21 transmits a status word indicating a normal end to the host device that is the transmission source of that verification command (S79), and enters a state of waiting for reception of a next command.

Next, a case will be described in which the IC card 1 sets an upper limit value for the number of times of retries of a verification process for each IEF storing a password.

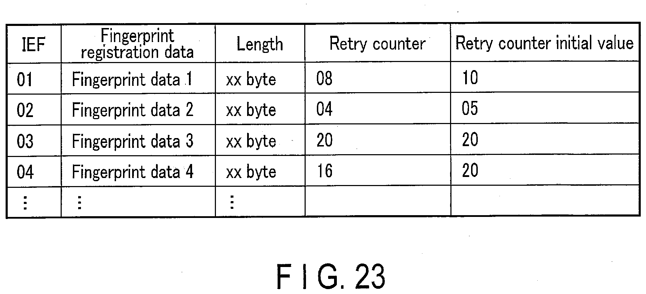

FIG. 23 is a diagram showing a configuration example of a management table (management table of registration data) for managing biological registration data to be registered for each IEF.

In the example shown in FIG. 23, in the management table of registration data, fingerprint registration data, a length, a retry counter, and an initial value of the retry counter are stored for each IEF storing a password. The fingerprint registration data and the password are registered as a pair in the table as shown in FIG. 23. As a result, the IC card 1 can execute biometric authentication by using fingerprint registration data paired with a password of an IEF (ID) designated by a command, and can set a verification result of the paired password to a verified state in response to success in that biometric authentication.

In the management table shown in FIG. 23, a retry counter is set for each piece of fingerprint registration data corresponding to an IEF. The retry counter indicates the number of times of remaining verifications in which the biometric authentication using the corresponding fingerprint registration data can be executed. In the retry counter, an upper limit value of an allowable number of times of verifications (the number of times of verification failures) is set as an initial value, and the retry counter is counted down each time the verification fails. Thus, the retry counter stores a value indicating the remaining number of times of verifications (the number of retries) in which the biometric authentication using the fingerprint registration data can be executed.

Further, the retry counter may be set to a value common to biological registration data (fingerprint registration data) and a password to be paired. If a common retry counter is used for biological registration data and a password to be paired, a retry counter indicating the remaining number of times of biometric verifications using biological registration data stored in the management table of the registration data shown in FIG. 23 is shared with the remaining number of times of password verifications for the password to be paired (a retry counter for the password to be paired).

For example, in a case where a retry counter is shared by biometric registration data and a password to be paired, if password verification fails, a retry counter corresponding to the biological registration data to be paired with that password is also counted down. Further, if biometric authentication using the biological registration data fails, a retry counter corresponding to the password paired with that biological registration data is also counted down.

Further, the retry counter may be set to different values for biological registration data and a password to be paired. In this case, the remaining number of times of biometric verifications using the biological registration data in the management table of the registration data is a value that is counted separately from the remaining number of times of password verifications for the password to be paired.

For example, in a case where retry counters are managed with different values for biological registration data and a password to be paired, if password verification fails, the retry counter corresponding to that password is counted down, but the retry counter corresponding to the biological registration data to be paired with that password is not updated. If the biometric authentication using the biological registration data fails, the retry counter for that biological registration data is counted down, but the retry counter for the password to be paired with that biological registration data is not updated (counted down) .

Further, in the case where the retry counter is managed with different values for the biological registration data and the password to be paired, if the retry counter of one of the biological registration data and the password to be paired becomes 0 (the number of retries exceeds an upper limit value), the processor 21 may lock both the paired biological registration data and password. Thus, if the number of times of retries of password verifications exceeds the upper limit value, the IC card can also lock the biometric authentication using the biological registration data paired with that password, and if the number of retries of biometric authentication using the biological registration data exceeds the upper limit value, the IC card can also lock the password verification using the password paired with that biological registration data.

Depending on the operation of the IC card 1, even if the retry counter is managed with different values for biological registration data and a password to be paired, the processor 21 may control the locked state separately for the paired biological registration data and password. That is, even if the number of times of retries of password verifications exceeds the upper limit value, the IC card may not lock biometric authentication using the biological registration data unless the retry counter of the biological registration data paired with that password exceeds the upper limit value. In this case, the IC card 1 may, if the biometric authentication using the biological registration data is successful, also reset the retry counter corresponding to the password to be paired.

Even if the number of retries of biometric authentications using biological registration data exceeds an upper limit value, provided a retry counter of a password to be paired with that biological registration data does not exceed an upper limit value, the IC card may not lock password verification using that password. Also in this case, if the password verification is successful, the IC card 1 may also reset the retry counter corresponding to the paired biological registration data.

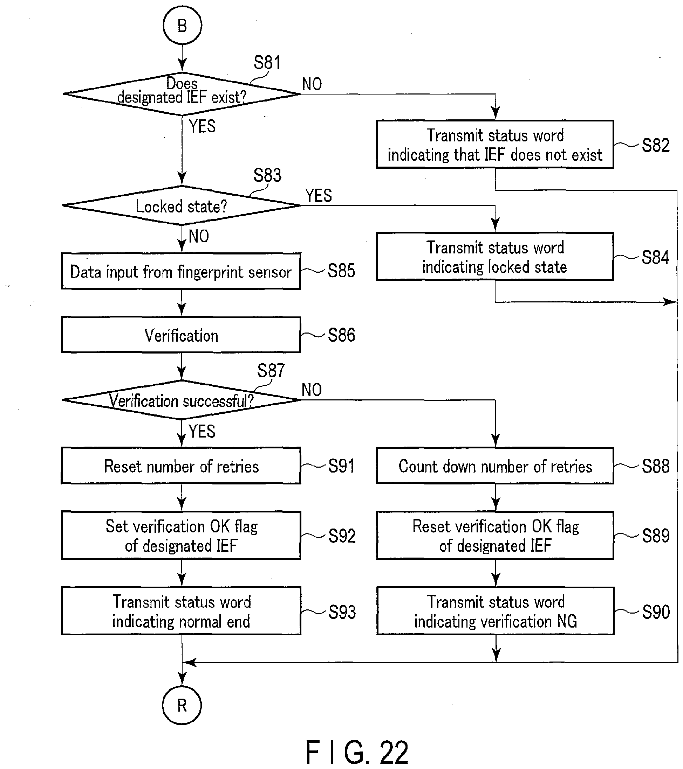

In the processing example shown in FIG. 22, if the IEF designated by the command exists (YES in S81), the processor 21 determines whether or not fingerprint registration data corresponding to the designated IEF is in a locked state (S83). For example, the processor 21 determines whether or not the fingerprint registration data is in the locked state based on whether or not a retry counter for the fingerprint registration data corresponding to the designated IEF is 0 in the management table of the registration data as shown in FIG. 23.

If the retry counter of the biometric authentication corresponding to the designated IEF is 0, that is, if the data is in the locked state (YES in S83), the processor 21 transmits a status word indicating the locked state to the host device that is the transmission source of the command (S84), and enters a state of waiting for reception of a next command.

If the retry counter of the biometric authentication corresponding to the designated IEF is not 0, that is, if the data is not in the locked state (NO in S83), the processor 21 executes biometric authentication using fingerprint registration data corresponding to that IEF. The processor 21 transmits the fingerprint registration data corresponding to the designated IEF to the biometric verification unit 12, and instructs the biometric verification unit 12 to input the fingerprint data by the biometric sensor 32 and to verify the fingerprint registration data with the input fingerprint data. The MPU 31 of the biometric verification unit 12 inputs fingerprint data by the biometric sensor 32 (S85), verifies the fingerprint data (input fingerprint data) input by the biometric sensor 32 with the fingerprint registration data designated by the processor 21 (S86), and supplies a verification result thereof to the processor 21.

The processor 21 determines whether or not the biometric authentication is successful according to the verification result from the biometric verification unit 12. Further, the processor 21 turns on the LED 13 according to the result of the biometric authentication. For example, the processor 21 turns on the LED 13 in a lighting state indicating that the biometric authentication is being executed during the input of the biological information and the execution of the biometric verification in the biometric verification unit 12. Furthermore, the processor 21 turns on the LED 13 in a lighting state indicating that the biometric authentication is successful if the biometric authentication is successful, and turns on the LED 13 in a lighting state indicating that the biometric authentication has failed if the biometric authentication has failed.

If the biometric authentication using the fingerprint registration data corresponding to the designated IEF fails (NO in S87), the processor 21 counts down the retry counter of the biometric authentication using the fingerprint registration data corresponding to the designated IEF (S88). In addition, the processor 21 resets information indicating the verification result for the password of that IEF to an unverified state (S89), transmits a status word indicating the failure of the biometric authentication (verification NG) to the host device that is the transmission source of the verification command (S90), and enters a state of waiting for reception of a next command.

If the biometric authentication using the fingerprint registration data corresponding to the designated IEF is successful (YES in S87), the processor 21 resets the retry counter of the biometric authentication using the fingerprint registration data corresponding to the IEF designated by that command to set the value of the retry counter to the initial value (S91). Further, in response to the success in biometric authentication, the processor 21 sets a verification result for the password of the IEF designated by that command to information (flag) indicating a verified state (verification successful, OK) (S92). After the verification result for the password of the designated IEF is set to the verified state in response to the success in biometric authentication, the processor 21 transmits a status word indicating a normal end to the host device that is the transmission source of that verification command (S93), and enters a state of waiting for reception of a next command.

According to the above-described processing, the IC card executes biometric authentication using biological (fingerprint) registration data corresponding to a designated IEF according to a verification command for requesting biometric verification, and if the biometric authentication is successful, sets a verification result of a password of that IEF to a verified state (verification successful). Thus, the IC card can replace the password verification of the designated IEF with the biometric authentication with high security. As a result, fingerprint registration data and a password used for the biometric authentication can be managed as a pair, and the verification of the designated password can be replaced with the biometric authentication using the biological information set as a pair in advance.

Further, according to the above-described processing example, the retry counter of the biometric authentication can be set for each piece of biological registration data, and the biometric authentication can be restricted for each piece of biological registration data. The retry counter of the biometric authentication provided for each piece of biological registration data is used in common with the retry counter for the password verification using the paired password, so that the number of times of authentications can be restricted with the paired password and biological registration data as one set of authentication data.

Further, the retry counter of the biometric authentication provided for each piece of biological registration data can be provided separately from the retry counter for the password verification using the corresponding password. In this case, if the retry counter of one of the paired password and biological registration data exceeds an upper limit of the number of times of authentications, the IC card can perform control to lock both the paired password and biological registration data.

Next, a processing example of executing biometric authentication if a specific command other than a verification command is received will be described.

In the above-described processing example, the process of, if a verification command for requesting biometric authentication is received, reflecting a success in biometric authentication to a password verification result has been described. However, the IC card 1 may execute biometric authentication if a specific command other than the verification command is received. Here, a case will be described in which, if the IC card 1 as the portable electronic device according to the embodiment receives a command (first command) received first after an initial response and a select command as specific commands for executing biometric authentication, biometric authentication is performed prior to processing of the commands.

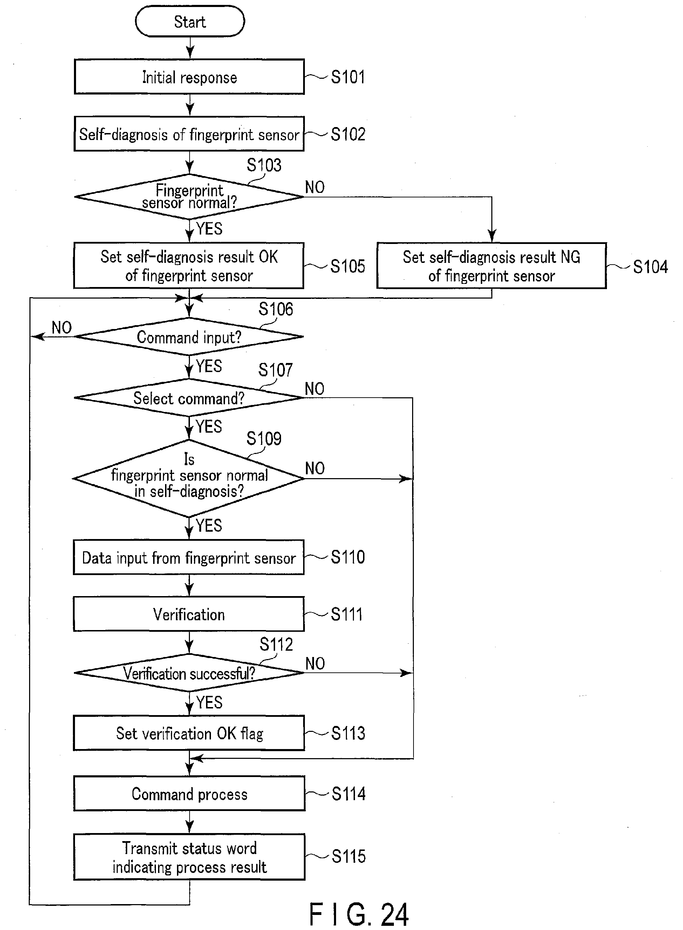

FIG. 24 is a flowchart for explaining a processing example for executing biometric authentication if the IC card 1 receives a select command.

First, if starting communication with the host device, the IC card 1 is activated by receiving supply of source power from the host device. After being activated by the power supplied from the host device, the processor 21 of the IC card 1 transmits an initial response to the host device via the communication interface 25 (S101).

The processor 21 checks whether or not the biometric (fingerprint) sensor 32 normally operates as a self-diagnosis process immediately after transmitting the initial response (S102). If it is confirmed by the self-diagnosis process that the fingerprint sensor 32 does not operate normally, the processor 21 stores the fact that the fingerprint sensor is anomalous as a self-diagnosis result of the fingerprint sensor 32 (S104). If it is confirmed that the fingerprint sensor 32 normally operates through the self-diagnosis process, the processor 21 stores the fact that the fingerprint sensor is normal as the self-diagnosis result of the fingerprint sensor 32 (S105). For example, the processor 21 stores the self-diagnosis result of the fingerprint sensor 32 in the RAM 23 or the data memory 24.

After the initial response (after the self-diagnosis), the processor 21 of the IC card 1 enters a state of waiting for reception of a command (S106). In this state, if a command is received from the host device (YES in S106), the processor 21 determines whether or not the received command is a select command (S107). If the received command is not a select command (NO in S107), the processor 21 proceeds to S114 and executes a command process corresponding to the received command.

If the received command is a select command (YES in S107), the processor 21 determines whether or not the fingerprint sensor 32 is normal in the self-diagnosis process (S109). If the fingerprint sensor 32 is anomalous in the self-diagnosis process (NO in S109), the processor 21 proceeds to S114 and executes a process corresponding to the received command (select command).

If the fingerprint sensor 32 is normal in the self-diagnosis process (YES in S109), the processor 21 proceeds to S114 and executes biometric authentication using the fingerprint registration data registered in the data memory 24. The processor 21 transmits the fingerprint registration data to the biometric verification unit 12, and instructs the biometric verification unit 12 to input fingerprint data by the biometric sensor 32 and to verify the fingerprint registration data with the input fingerprint data. In this case, the processor 21 turns on the LED 13 in a lighting state indicating that biometric (fingerprint) verification is being executed.

The MPU 31 of the biometric verification unit 12 inputs fingerprint data by the biometric sensor 32 (S110), verifies the fingerprint data (input fingerprint data) input by the biometric sensor 32 with the fingerprint registration data designated by the processor 21 (S111), and supplies a verification result thereof to the processor 21.

The processor 21 determines whether or not the biometric authentication is successful based on the verification result of the biometric verification unit 12. The processor 21 turns on the LED 13 according to the result of the biometric authentication. For example, if the biometric authentication is successful, the processor 21 turns on the LED 13 in a lighting state indicating that the biometric authentication is successful, and if the biometric authentication has failed, the processor 21 turns on the LED 13 in a lighting state indicating that the biometric authentication has failed.

If the biometric authentication (verification) is successful (YES in S112), the processor 21 sets a verification result of a password to which the authentication result of the biometric authentication is to be reflected to a verified state (S113). For example, the processor 21 sets verification results of all the passwords to verified states in response to the success in biometric authentication. Further, the processor 21 may set a verification result of a password of an IEF subordinate to a DF for which a select command is selected to a verified state. After setting the verification result of the password to the verified state in response to the success in biometric authentication (verification), the processor 21 executes a command process requested by that command (S114).

If the biometric authentication (verification) has failed (NO in S112), the processor 21 executes a command process corresponding to the received command without changing the verification result of the password (S114).

Upon completion of the command process, the processor 21 transmits a status word indicating an execution result of the command process to the host device (S115), and enters a state of waiting for a next command.

According to the above-described processing, the IC card executes biometric authentication if a select command is received, and if the biometric authentication is successful, executes a process of setting a verification result of a password to a verified state. As a result, the IC card can execute biometric authentication if the select command is received without receiving a verification command for requesting the biometric authentication from the host device. This makes it possible to omit the process of supplying the biometric authentication or the password verification from the host device to the IC card, and to further improve the security through the biometric authentication.

Next, a description will be given of a processing example in which biometric authentication is executed if a specific command other than a verification command is received, and a command process is not executed unless the biometric authentication is successful.

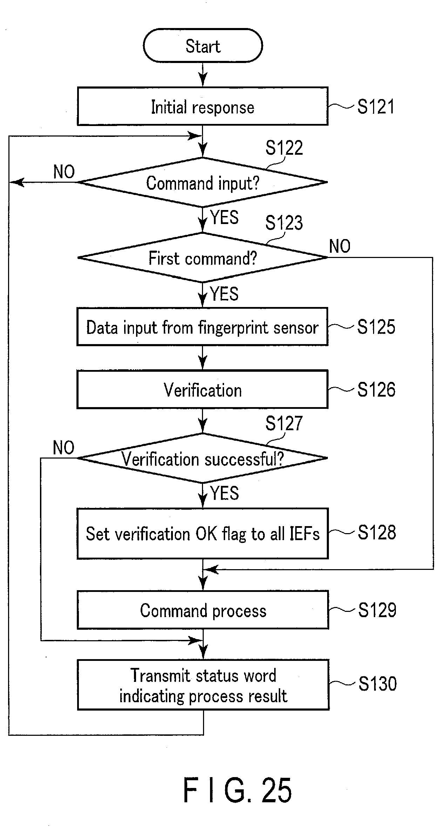

FIGS. 25 to 32 are flowcharts for explaining a processing example in which a command process is not executed unless biometric authentication executed if the IC card 1 receives a specific command is successful.

In FIG. 25, it is assumed that the biometric authentication is executed if a first command (first command) after an initial response is received as a specific command other than a verification command.

First, the IC card 1 is activated by receiving supply of source power from the host device. After being activated by the power supplied from the host device, the processor 21 of the IC card 1 transmits an initial response to the host device via the communication interface 25 (S121).

After the initial response, the processor 21 of the IC card 1 enters a state of waiting for reception of a command after the initial response (after the self-diagnosis). However, the processor 21 may execute the self-diagnosis process of the biometric (fingerprint) sensor 32 as described in S102 to S105 in FIG. 24 after the initial response.

If the command from the host device is received in the command reception waiting state (YES in S122), the processor 21 determines whether or not the received command is the first command after the initial response (S123). Here, the first command (first command) after the initial response is a specific command for executing biometric authentication. If the received command is not the first command (NO in S123), the processor 21 proceeds to S129 and executes a command process corresponding to the received command.

If the received command is the first command (YES in S123), the processor 21 executes biometric authentication using the fingerprint registration data registered in the data memory 24. The processor 21 transmits the fingerprint registration data to the biometric verification unit 12, and instructs the biometric verification unit 12 to input fingerprint data by the biometric sensor 32 and to verify the fingerprint registration data with the input fingerprint data. During the execution of such biometric authentication, the processor 21 turns on the LED 13 in a lighting state indicating that biometric (fingerprint) verification is being executed.

The MPU 31 of the biometric verification unit 12 inputs fingerprint data by the biometric sensor 32 (S125), verifies the fingerprint data (input fingerprint data) input by the biometric sensor 32 with the fingerprint registration data designated by the processor 21 (S126), and supplies a verification result thereof to the processor 21. The processor 21 determines whether or not the biometric authentication is successful based on the verification result of the biometric verification unit 12. Further, the processor 21 turns on the LED 13 according to the result of the biometric authentication. For example, the processor 21 turns on the LED 13 in a lighting state indicating that the biometric authentication is successful if the biometric authentication is successful, and the processor 21 turns on the LED 13 in a lighting state indicating that the biometric authentication has failed if the biometric authentication has failed.

If the biometric authentication (verification) is successful (YES in S127), the processor 21 performs a process of setting a verification result of a password to a verified state in response to the success in biometric authentication (S128). After the password verification result is set to the verified state in response to the success in biometric authentication, the processor 21 executes a command process requested by that command (S129). Upon completion of the command process, the processor 21 transmits a status word indicating an execution result of the command process to the host device (S130), and enters a state of waiting for a next command.

If the biometric authentication (verification) has failed (NO in S127), the processor 21 does not execute that command process and enters a state of waiting for a next command. In this case, the processor 21 may transmit, as a response to the received command, a status word indicating that the command cannot be executed because the biometric authentication is not successful to the host device.

In a case where the biometric authentication executed by the first command after the initial response is not successful, the processor 21 may determine that a command to be received next is also a specific command, proceed to the process in S125, and execute the biometric authentication.

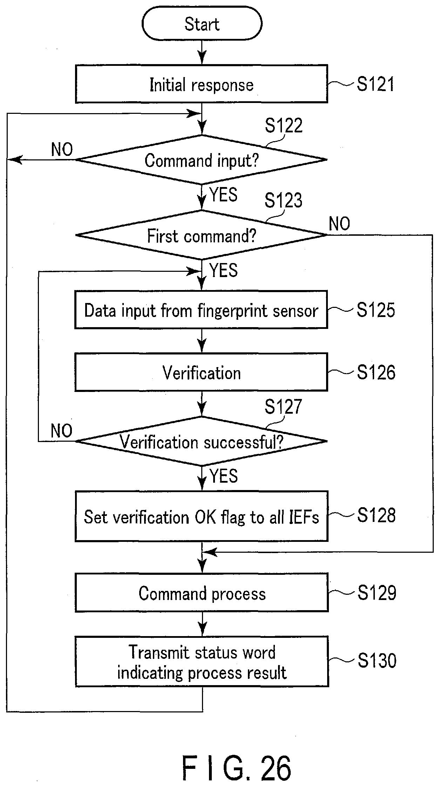

FIG. 26 is a flowchart showing a flow of processing as a first modification of the processing shown in FIG. 25.

The processing shown in FIG. 26 is processing of executing biometric authentication if the first command (first command) after an initial response is received as a specific command other than a verification command, similarly to the processing example of FIG. 25. However, the processing shown in FIG. 26 is different from the processing example shown in FIG. 25 in that biometric authentication is executed again if the biometric authentication fails.

That is, in the processing example shown in FIG. 26, if the biometric authentication (verification) fails, the processor 21 of the IC card 1 returns to S125, re-executes input of fingerprint data by the biometric sensor 32 (S125), and again executes biometric verification between the fingerprint data (input fingerprint data) re-input by the biometric sensor 32 and the fingerprint registration data designated by the processor 21 (S126).

In the processing example shown in FIG. 26, if the number of times that input and verification of the fingerprint data are consecutively executed exceeds a predetermined upper limit number of times, the processor 21 may proceed to S130 and transmit, as a response to the received command, a status word indicating that the command cannot be executed because the biometric authentication is not successful to the host device.

According to the first modification as described above, if there is a failure in input of fingerprint data by the biometric sensor 32, the IC card 1 can perform input and verification of fingerprint data again.

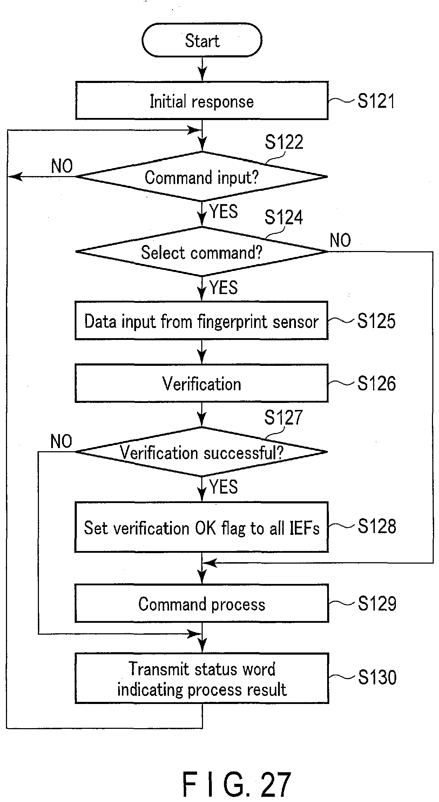

FIG. 27 is a flowchart showing a flow of processing as a second modification of the processing shown in FIG. 25.

FIG. 27 shows a processing example of executing biometric authentication if a select command is received as a specific command other than a verification command. However, the processing shown in FIG. 27 is the same as the processing example shown in FIG. 25 except that a specific command other than a verification command is a select command.

That is, in the processing example shown in FIG. 27, if the received command is a select command (YES in S124), the processor 21 of the IC card 1 proceeds to S125 and executes biometric authentication using the fingerprint registration data registered in the data memory 24. If the received command is a command other than a select command (NO in S124), the processor 21 proceeds to S129 and executes a process corresponding to the received command.

According to the second modification as described above, the IC card 1 can execute the biometric authentication if the select command is received.

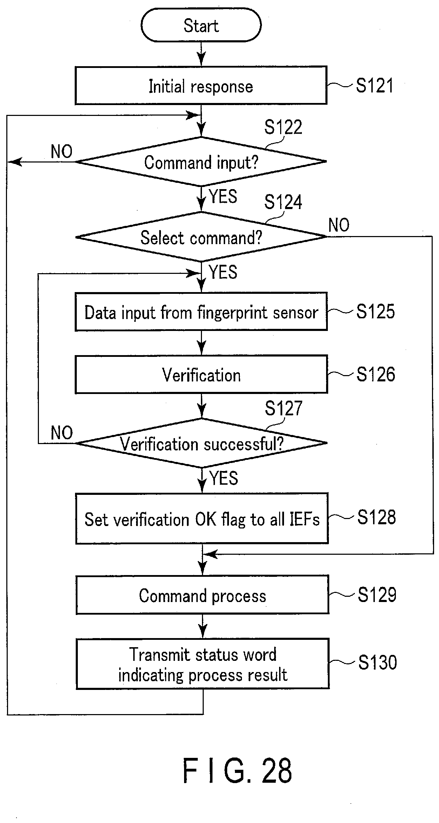

FIG. 28 is a flowchart showing a flow of processing as a third modification of the processing shown in FIG. 25.

FIG. 28 shows a processing example of executing biometric authentication if a select command is received as a specific command other than a verification command, similarly to the processing example of FIG. 27. However, the processing shown in FIG. 28 is different from the processing example shown in FIG. 27 in that if biometric authentication fails, the biometric authentication is executed again.

That is, in the processing example shown in FIG. 28, if the biometric authentication (verification) executed after receiving the select command fails (NO in S127), the processor 21 of the IC card 1 returns to S125, re-executes input of fingerprint data by the biometric sensor 32 (S125), and again executes biometric verification between the fingerprint data (input fingerprint data) re-input by the biometric sensor 32 and the fingerprint registration data designated by the processor 21 (S126).

In the processing example shown in FIG. 28, if the number of times that input and verification of the fingerprint data are continuously executed exceeds a predetermined upper limit number of times, the processor 21 may proceed to S130 and transmit a status word indicating that the select command cannot be executed because the biometric authentication is not successful to the host device.

According to the third modification as described above, the IC card 1 can execute biometric authentication if a select command is received, and further, if there is a failure in input of fingerprint data by the biometric sensor 32, the IC card 1 can input and verify the fingerprint data again.

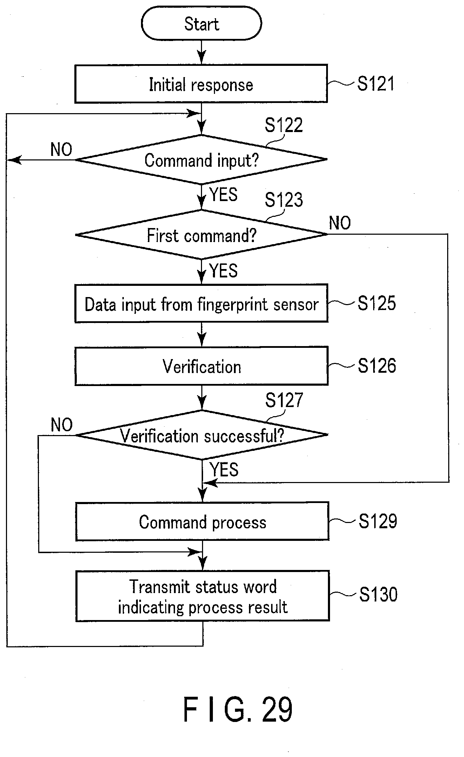

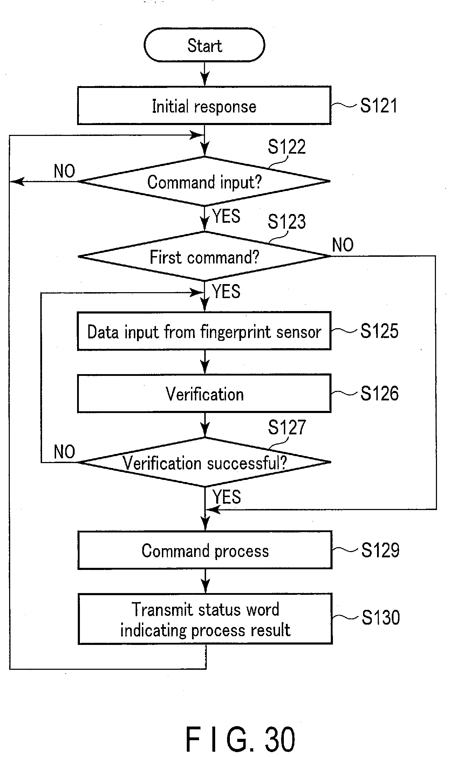

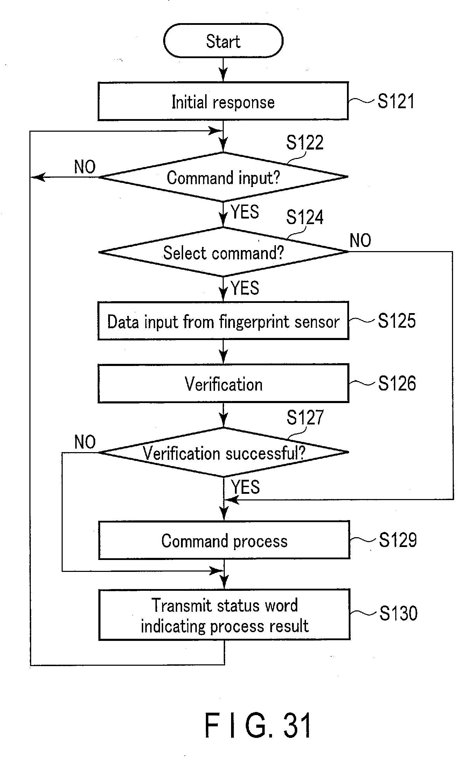

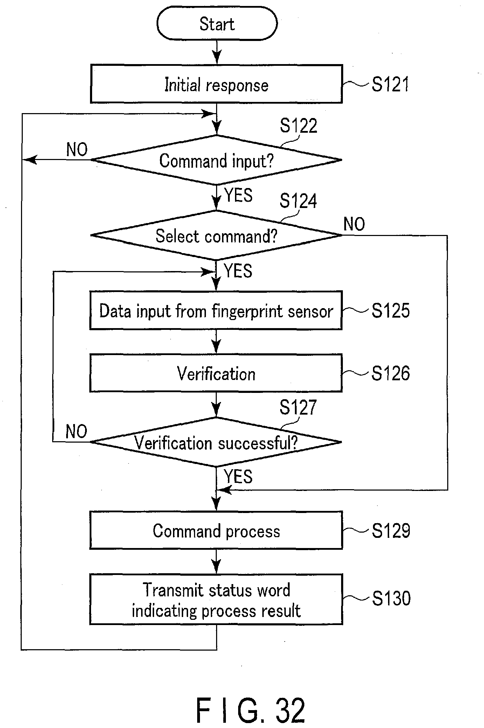

FIGS. 29 to 32 are flowcharts showing fourth to seventh modifications as further modifications of the processing shown in FIGS. 25 to 28. For example, FIG. 29 is a fourth modification of the processing shown in FIG. 25, and shows a processing example in a case where the process in S128 in the processing shown in FIG. 25 is omitted. FIG. 30 is a fifth modification of the processing shown in FIG. 25, and shows a processing example in a case where the process in S128 in the processing shown in FIG. 26 is omitted. FIG. 31 is a sixth modification of the processing shown in FIG. 25, and shows a processing example in a case where the process in S128 in the processing shown in FIG. 27 is omitted. FIG. 32 is a seventh modification of the processing shown in FIG. 25, and shows a processing example in a case where the process in S128 in the processing shown in FIG. 28 is omitted.

That is, as shown in FIGS. 26 to 32, the IC card 1 may omit the process of setting the verification result of the password to the verified state if the biometric authentication (verification) is successful. In this case, in a case of receiving a specific command such as a first command or select command, the IC card can be made to execute a command process if biometric authentication (verification) is successful, and not to execute a command process if the biometric authentication (verification) fails.

According to the above processing, the IC card executes biometric authentication if a specific command such as a first command or select command after an initial response is received, executes a command process if the biometric authentication is successful, and does not execute the command process for that command if the biometric authentication fails. Accordingly, the IC card can be made not to execute a command process unless biometric authentication executed if a specific command such as a first command or select command is received is successful.

Further, the IC card can be made to set a verification result of a password to a verified state and execute a command process if biometric authentication executed if a specific command such as a first command or select command after an initial response is received is successful. This allows the IC card to set the verification result of the password to a verified state if the biometric authentication executed according to the specific command is successful and to speed up the command process.

The functions described above for each of the embodiments are not only limited to those configured using hardware, and may be implemented using software by causing a computer to read a program in which each function is described. In addition, each function may be formed by appropriately selecting either software or hardware.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable electronic device comprising:
a biometric sensor configured to acquire biological information of a person;
a communication interface configured to communicate with a host device;
a first memory configured to store biological information of a registrant;
a second memory configured to store one or more passwords; and
a processor configured to execute, according to a command for requesting biometric authentication received from the host device through the communication interface, biometric authentication using the biological information acquired by the biometric sensor and the biological information stored in the first memory, and set a verification state of the password stored in the second memory to a verified state if the biometric authentication is successful.

2. The portable electronic device according to claim 1, wherein
the processor is configured to, if the biometric authentication is successful, set verification states of all the passwords stored in the second memory to verified states.

3. The portable electronic device according to claim 1, wherein
the processor is configured to, if the biometric authentication is successful, set a verification state for a password associated with the biological information stored in the first memory and used for the biometric authentication among the passwords stored in the second memory to a verified state.

4. The portable electronic device according to claim 1, wherein
the processor is configured to, if the biometric authentication is successful, set a verification state of a password designated by the command among the passwords stored in the second memory to a verified state.

5. The portable electronic device according to claim 1, wherein
the first memory is configured to store biological information associated with the passwords stored in the second memory, and
the processor is configured to execute biometric verification using biological information corresponding to a password designated by the command among the biological information stored in the first memory.

6. The portable electronic device according to claim 5, wherein
the processor is configured to manage the number of retries for the password stored in the second memory and the number of retries for the biological information stored in the first memory and corresponding to the password stored in the second memory as a common number of retries.

7. The portable electronic device according to claim 5, wherein
the processor is configured to separately manage the number of retries for the password stored in the second memory and the number of retries for the biological information stored in the first memory and corresponding to the password stored in the second memory.

8. The portable electronic device according to claim 7, wherein
the processor is configured to, if one of the number of retries for the biological information stored in the first memory and the number of retries corresponding to the password stored in the second memory exceeds an upper limit number of retries, lock both the biometric authentication using the biological information and verification of the password.

9. The portable electronic device according to any one of claims 1 to 8, wherein
the processor is configured to execute biometric authentication if a verification command for requesting biometric authentication is received from the host device through the communication interface.

10. The portable electronic device according to any one of claims 1 to 8, wherein
the processor is configured to execute biometric authentication if a specific command is received from the host device through the communication interface.

11. The portable electronic device according to claim 10, wherein
the specific command is a command that is first received after an initial response is output through the communication interface.

12. The portable electronic device according to claim 10, wherein
the specific command is an application select command.

13. The portable electronic device according to claim 10, wherein
the processor is configured to execute self-diagnosis of the biometric sensor after outputting an initial response through the communication interface, and execute biometric authentication if a self-diagnosis result of the biometric sensor is normal.

14. The portable electronic device according to claim 10, wherein
the processor is configured not to execute a process requested by the specific command unless the biometric authentication executed if the specific command is received is successful.

15. The portable electronic device according to claim 10, wherein
the processor is configured to, if the biometric authentication executed if the specific command is received is not successful, re-acquire biological information by the biometric sensor, and execute again biometric authentication using the biological information re-acquired by the biometric sensor and the biological information stored in the first memory.

16. The portable electronic device according to any one of claims 1 to 15, further comprising an LED whose lighting state is controlled,
wherein the processor is configured to control a display state of the LED according to a result of the biometric authentication.

17. The portable electronic device according to any one of claims 1 to 16, wherein
the biometric sensor is a fingerprint sensor configured to acquire fingerprint information.

18. An IC card comprising:
a biometric sensor configured to acquire biological information of a person;
a module including a communication interface configured to communicate with a host device, a first memory configured to store biological information of a registrant, a second memory configured to store a password, and a processor configured to execute, according to a command for requesting biometric authentication received from the host device through the communication interface, biometric authentication using the biological information acquired by the biometric sensor and the biological information stored in the first memory and set a verification state of the password stored in the second memory to a verified state if the biometric authentication is successful; and
a main body that holds a state in which the biometric sensor and the module are connected to each other.
